# EUROPÄISCHE PATENTSCHRIFT

(11) **EP 1 063 447 B1**
(45) Veröffentlichungstag und Bekanntmachung des Hinweises auf die Patenterteilung: **01.09.2004**
(21) Anmeldenummer: 00112284.5
(22) Anmeldetag: 08.06.2000
(51) Int. Cl.: F16F 15/26

(54) **Hubkolben-Brennkraftmaschine mit Neben- und Hilfs-Aggregaten**
Internal combustion piston engine with auxiliaries and accessories
Moteur à pistons et à combustion interne ayant des groupes accessoires et des groupes auxiliaires

(30) Priorität: 26.06.1999 DE 19929417
(43) Veröffentlichungstag der Anmeldung: 27.12.2000
(73) Patentinhaber: Bayerische Motoren Werke Aktiengesellschaft, 80809 München (DE)
(72) Erfinder: Kranawetter, Erwin, 4531 Kematen (AT); Reisinger, Walter, 4311 Schwertberg (AT); Fessel, Christoph, Dr., 3511 Furth (AT); Mitterhuber, Ralph, 4550 Kremsmünster (AT); Ratzberger, Reinhard, 4431 Haidershofen (AT)

(56) Entgegenhaltungen:
- EP-A- 0 453 723
- DE-A- 3 148 602
- DE-A- 3 917 494
- DE-C- 4 204 522
- US-A- 4 766 857
- PATENT ABSTRACTS OF JAPAN vol. 009, no. 219 (M-410), 6. September 1985 (1985-09-06) & JP 60 079124 A (ISUZU JIDOSHA KK), 4. Mai 1985 (1985-05-04)

## Beschreibung

Die Erfindung bezieht sich nach dem Oberbegriff des Patentanspruches 1 auf eine Hubkolben-Brennkraftmaschine mit Neben- und Hilfs-Aggregaten, wobei ein Nebenaggregat und als Hilfsaggregate dienende Ausgleichswellen über ein Getriebe mit einer Kurbelwelle der Brennkraftmaschine in Antriebsverbindung stehen und die gegensinnig drehend angetriebenen Ausgleichswellen im wesentlichen parallel zur Kurbelwelle angeordnet sind.

Eine derartige Brennkraftmaschine ist beispielsweise aus dem nächstliegenden Stand der Technik, der DE 25 42 738 A bekannt, wobei neben den Ausgleichswellen als Nebenaggregat eine Nockenwelle von einem einzigen Steuerriemen oder einer einzigen Steuerkette von der Kurbelwelle aus angetrieben sind. Nachteilig bei dieser Antriebsanordnung sind sowohl die von der Kurbelwelle als auch von der Nockenwelle eingehenden Drehschwingungen und Drehungleichförmigkeiten.

Bekanntlich verursachen Drehschwingungen aufgrund ungenügender Torsionssteifigkeit der jeweiligen Welle sowie überlagerte Drehungleichförmigkeiten aufgrund der Zündabstände der einzelnen Zylinder der Hubkolben-Brennkraftmaschine nachteilig wirksame Wechselmomente im Antrieb.

Diese Wechselmomente können bei einem Zahnradtrieb zu einem ständigen Anlagewechsel der Zahnflanken bzw. bei schräg verzahnten Zahnrädern zusätzlich zu einem Anlagewechsel der Axiallager der Ausgleichswellen führen. Durch diesen Anlagewechsel werden hochfrequente Geräusche emittiert, welche auch durch aufwendige Schallisolierung nicht ausreichend gedämmt werden können.

Diesen nachteiligen Wechselmomenten wird bei einer jeweiligen, aus den japanischen Patentoffenlegungsschriften 11002290 und 11051120 bekannten Brennkraftmaschine mit über ein kurbelwellenseitiges Zahnrad angetriebenen Ausgleichswellen dadurch begegnet, daß die kurbelwellenseitig angetriebene und ihrerseits die andere Ausgleichswelle mittreibende Ausgleichswelle mit einem Drehschwingungsdämpfer ausgerüstet ist. Nachteilig bei diesem vorgeschlagenen Drehschwingungsdämpfer ist sein mechanischer Aufbau mit über Federn abgestützte Massen, die bei der doppelten Drehzahl gegenüber der Kurbelwelle hohen mechanischen Belastungen ausgesetzt sind und somit eine eingeschränkte Betriebssicherheit zur erwarten ist.

Bei einem Antrieb durch ein Zugmittelgetriebe treten insbesondere bei Verwendung einer Kette Resonanzüberhöhungen des Drehschwingungssystems Kurbelwelle-Kette-Ausgleichswellen auf, insbesondere bei weicher Abstimmung des hydraulischen Kettenspanners. Die daraus resultierenden hohen Kräfte führen zu hohem Verschleiß an Kette, Kettenrädern, Spann- und Führungsschienen. Ebenso werden durch den dabei verstärkt auftretenden Polygon-Effekt der Kette hochfrequente Geräusche über die Wellen in das Gehäuse der Brennkraftmaschine eingeleitet und nach außen emittiert.

Um in einem Zugmittelgetriebe die nachteiligen Drehschwingungen vom jeweiligen Zugmittel zu isolieren, ist es aus der DE 31 48 602 A1 bekannt, bei einem Antriebsriemen- und Riemenscheibensystem zur Kraftübertragung von der Kurbelwelle einer Brennkraftmaschine auf mehrere kraftverbrauchende Vorrichtungen, wie einen Generator, eine Servolenkpumpe etc. eine mit der Kurbelwelle der Brennkraftmaschine gekuppelte hydraulische Schub-Riemenscheibe vorzusehen, die nach dem Prinzip eines Viskositäts-Drehschwingungsdämpfers arbeitet. Mit dem Einsatz eines derartigen Drehschwingungsdämpfers als drehmomentübertragendes Element sind in Abhängigkeit äußerer Temperatureinflüsse auf die Viskoseflüssigkeit des Drehschwingungsdämpfers in nachteiliger Weise ungleichmäßige Leistungsübertragungen zu erwarten.

Der Erfindung liegt die Aufgabe zugrunde, für den Antrieb der Neben- und Hilfs-Aggregate der gattungsgemäßen Hubkolben-Brennkraftmaschine bei einwandfreier Leistungsübertragung einen betriebssicheren Drehschwingungsdämpfer aufzuzeigen.

Diese Aufgabe ist mit dem Patentanspruch 1 dadurch gelöst, daß zumindest eine der Ausgleichswellen mit einem Viskositäts-Drehschwingungsdämpfer ausgerüstet ist.

Eine besonders vorteilhafte Weiterbildung der Erfindung ist in Verbindung mit einem Zugmittelgetriebe dadurch erreicht, daß das Getriebe ein Kettentrieb ist mit einer nachführbar angeordneten Spannschiene der Kette, wobei die Kette mit einem Antriebsrad einer Ölpumpe als Nebenaggregat und mit einem Antriebsrad einer der Ausgleichswellen zusammenwirkt, und daß die miteinander in Antriebsverbindung stehenden Ausgleichswellen jeweils mit einem Viskositäts-Drehschwingungsdämpfer ausgerüstet sind.

Die erfindungsgemäße Antriebskombination zweier Ausgleichswellen mit Viskositäts-Drehschwingungsdämpfern einerseits und einer Ölpumpe als Nebenaggregat andererseits ergibt mit dem gesonderten Antrieb der Ölpumpe einen zusätzlichen Dämpfungseffekt in der Kette des Zugmittelgetriebes. Da hiermit Resonanzüberhöhungen des Drehschwingungssystems Kurbelwelle-Kette-Ausgleichswellen reduziert oder gar vermieden sind, wird durch die vorteilhaft geringeren Kräfte im Kettentrieb einerseits die Dauerhaltbarkeit der Kette über der Lebensdauer des Motors erreicht und andererseits verringert sich die Geräuschemission aufgrund des vorteilhaft geringer wirkenden Polygon-Effektes deutlich. Weiter wird in vorteilhafter Weise beim Zahnradtrieb der Ausgleichswellen der Anlagewechsel der Zahnflanken bzw. der Axiallager und dadurch auftretende akustische Beeinträchtigungen vorteilhaft verhindert. Somit können schalldämmende Maßnahmen in vorteilhafter Weise wesentlich verringert werden.

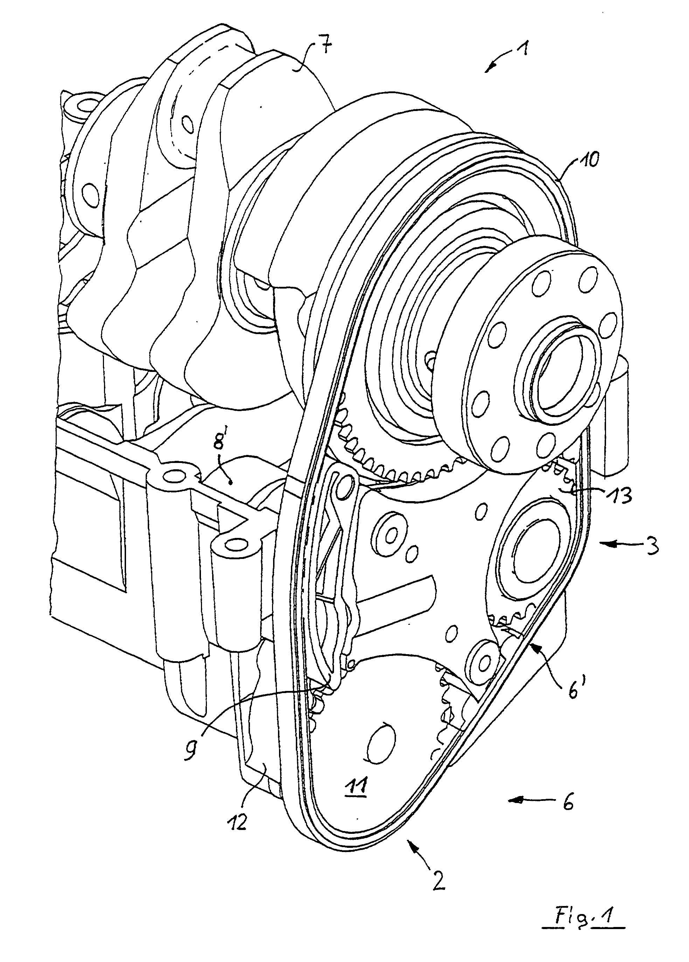

Die Erfindung ist anhand eines in der Zeichnung dargestellten Beispiels beschrieben. Es zeigt
- Figur 1: eine angedeutete Hubkolben-Brennkraftmaschine mit Neben- und Hilfs-Aggregaten mit derem Antrieb, und
- Figur 2: die als Hilfsaggregate dienenden Ausgleichswellen mit angeordneten Viskositäts-Drehschwingungsdämpfem.

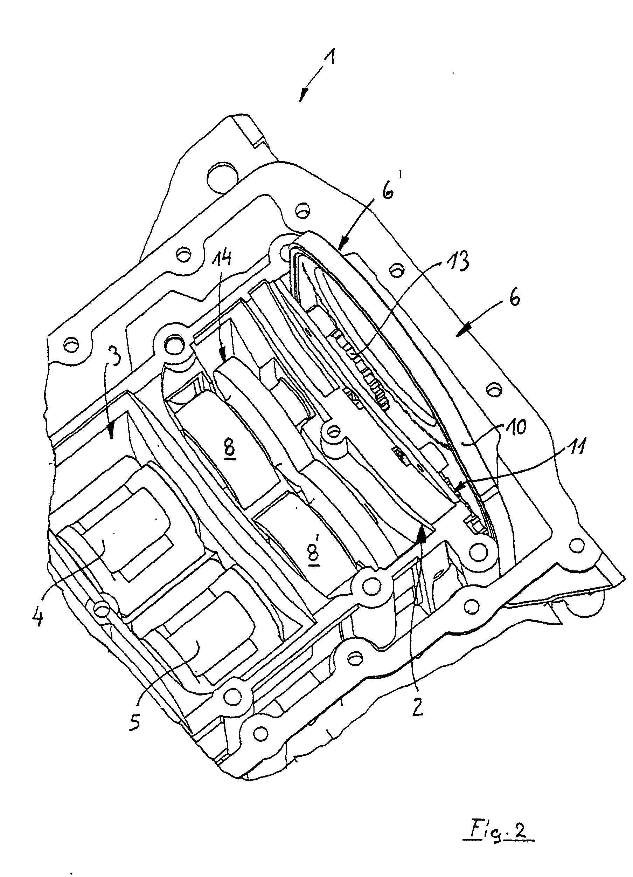

Eine lediglich angedeutete Hubkolben-Brennkraftmaschine 1 ist mit einem Nebenaggregat 2 und mit Hilfs-Aggregaten 3 ausgerüstet, wobei das Nebenaggregat 2 und als Hilfs-Aggregate 3 dienende Ausgleichswellen 4 und 5 über ein Getriebe 6 mit einer Kurbelwelle 7 der Brennkraftmaschine 1 in Antriebsverbindung stehen. Wie aus Figur 2 ersichtlich, sind die gegensinnig drehend angetriebenen Ausgleichswellen 4 und 5 im wesentlichen parallel zur Kurbelwelle 7 und unterhalb dieser angeordnet.

Das Getriebe 6 bildet in Verbindung mit der Kurbelwelle 7 und dem Nebenaggregat 2 sowie den Hilfs-Aggregaten 3 ein Drehschwingungssystem, für das bei einwandfreier Leistungsübertragung ein betriebssicherer Drehschwingungsdämpfer aufzuzeigen ist, der erfindungsgemäß als ein Viskositäts-Drehschwingungsdämpfer 8, 8' vorgesehen ist zumindest auf einer der Ausgleichswellen 4, 5.

In einer bevorzugten Weiterbildung der Erfindung umfaßt das als Zugmittelgetriebe gestaltete Getriebe 6 einen Kettentrieb 6' mit einer nachführbar angeordneten Spannschiene 9 der Kette 10, wobei die Kette 10 mit einem Antriebsrad 11 einer Ölpumpe 12 als Nebenaggregat 2 und mit einem Antriebsrad 13 einer der Ausgleichswellen 4, 5 zusammenwirkt, wobei ferner die miteinander über ein Zahnradpaar 14 in Antriebsverbindung stehenden Ausgleichswellen 4 und 5 jeweils mit einem Viskositäts-Drehschwingungsdämpfer 8, 8' ausgerüstet sind. Mit der Ausgestaltung des Nebenaggregates 2 als Ölpumpe 12 ist in dem Kettentrieb 6' ein weiteres Dämpfungselement integriert.

Mit dieser Ausgestaltung kann die Vorspannung der Kette 10 durch die Spannschiene 9 in vorteilhafter Weise wesentlich niedriger gehalten werden, wobei die hydraulische Abstimmung der Vorspannung der Spannschiene 9 deutlich weicher erfolgen kann. Weiter ist in vorteilhafter Weise mit den wesentlich geringeren Kräften im Kettentrieb 6' die Auswirkung des Polygon-Effektes auf die Geräuschemission deutlich reduziert.

## Patentansprüche

1. Hubkolben-Brennkraftmaschine mit Neben- und Hilfs-Aggregaten,
- wobei ein Nebenaggregat (2) und als Hilfs-Aggregate (3) dienende Ausgleichswellen (4, 5) über ein Getriebe (6) mit einer Kurbelwelle (7) der Brennkraftmaschine (1) in Antriebsverbindung stehen und
- die gegensinnig drehend angetriebenen Ausgleichswellen (4, 5) im wesentlichen parallel zur Kurbelwelle (7) angeordnet sind,
**dadurch gekennzeichnet,**
- **daß** zumindest eine der Ausgleichswellen (4, 5) mit einem Viskositäts-Drehschwingungsdämpfer (8, 8') ausgerüstet ist.

2. Brennkraftmaschine nach Anspruch 1, **dadurch gekennzeichnet,**
- **daß** das Getriebe (6) ein Kettentrieb (6') ist mit einer nachführbar angeordneten Spannschiene (9) der Kette (10), wobei
- die Kette (10) mit einem Antriebsrad (11) einer Ölpumpe (12) als Nebenaggregat (2) und mit einem Antriebsrad (13) einer der Ausgleichswellen (4, 5) zusammenwirkt, und daß die miteinander in Antriebsverbindung stehenden Ausgleichswellen (4, 5) jeweils mit einem Viskositäts-Drehschwingungsdämpfer (8, 8') ausgerüstet sind.

## Claims

1. Reciprocating piston internal-combustion engine with ancillary and auxiliary assemblies,
- wherein an ancillary assembly (2) and balancer shafts (4, 5) serving as auxiliary assemblies (3) are in drive connection with a crankshaft (7) of the internal-combustion engine (1) via a gearing (6) and
- the balancer shafts (4, 5) rotated in opposite directions are arranged substantially parallel to the crankshaft (7),
**characterised in that**
- at least one of the balancer shafts (4, 5) is equipped with a viscosity rotary oscillation damper (8, 8').

2. Internal-combustion engine according to claim 1, **characterised in that**
- the gearing (6) is a chain drive (6') with an adjustably arranged slide rail (9) of the chain (10), wherein
- the chain (10) cooperates with a drive wheel (11) of an oil pump (12) as an ancillary unit (2) and with a drive wheel (13) of one of the balancer shafts (4, 5), and **in that** the balancer shafts (4, 5) which are in drive connection with one another are each equipped with a viscosity rotary oscillation damper (8, 8').

## Revendications

1. Moteur à combustion interne à piston alternatif comportant des groupes accessoires et des groupes auxiliaires,
- dans lequel un groupe accessoire (2) et des arbres de compensation (4, 5) qui servent de groupes auxiliaires (3) sont en liaison d'entraînement avec un vilebrequin (7) du moteur à combustion interne (1) par l'intermédiaire d'une transmission (6) et
- les arbres de compensation (4, 5) entraînés en tournant en sens inverse sont disposés presque parallèlement au vilebrequin (7),
**caractérisé en ce que**
- au moins l'un des arbres de compensation (4, 5) est équipé d'un amortisseur de vibrations torsionnelles à viscosité (8, 8').

2. Moteur à combustion interne selon la revendication 1,
**caractérisé en ce que**
- la transmission (6) est une transmission par chaîne (6') comportant un rail de tension (9) disposé de façon réglable,
- la chaîne (10) agissant conjointement avec une roue motrice (11) d'une pompe à huile (12) qui sert de groupe accessoire (2) et avec une roue motrice (13) d'un des arbres de compensation (4, 5), et les arbres de compensation (4, 5) en liaison d'entraînement l'un avec l'autre sont respectivement équipés d'un amortisseur de vibrations torsionnelles à viscosité (8, 8').
